# EUROPEAN PATENT SPECIFICATION

(11) **EP 3 105 833 B1**
(45) Date of publication and mention of the grant of the patent: **02.01.2019**
(21) Application number: 14815802.5
(22) Date of filing: 05.12.2014
(51) Int. Cl.: H02J 7/00

(54) **PORTABLE MULTIPLE MOBILE ELECTRONIC DEVICE CHARGING STATION**
TRAGBARE LADESTATION FÜR MEHRERE MOBILE ELEKTRONISCHE VORRICHTUNGEN
STATION DE CHARGE DE PLUSIEURS DISPOSITIFS ELECTRONIQUES MOBILES PORTATIVE

(30) Priority: 09.12.2013 US 201313998785
(43) Date of publication of application: 21.12.2016
(73) Proprietor: Clark, Kenneth E., Celebration, FL 34747 (US)
(72) Inventor: Clark, Kenneth E., Celebration, FL 34747 (US)
(74) Representative: HGF Limited
(86) International application number: PCT/GB2014/053630
(87) International publication number: WO 2015/087057

(56) References cited:
- WO-A1-2012/066407
- WO-A2-2006/022552
- US-A1- 2003 025 476
- US-A1- 2013 041 730
- US-A1- 2013 043 827
- US-A1- 2013 234 644
- US-A1- 2013 320 913

## Description

### BACKGROUND TO THE INVENTION

Current mobile phones use more battery power for all of the applications and the battery life of the phone is depleted rapidly causing the need to recharge the device more often. Typically a person does not carry a charging device with them and if so they do not have access to a power outlet. The present invention for charging mobile phones in public places will offer a much needed convenience. The advertising space offers businesses an incentive to offer the convenience.
The prior art proposes various solutions for the task.

US 2003/0025476 A1 discloses a portable device equipped to re-charge cellular phones and transmit an e-911 signal to authorities. A person in need of e-911 service or emergency recharge power can release the device from its housing and carry the power and e-911 transmitter to an emergency situation. The device provides a portable cellular charging station having a housing, rechargeable batteries and multiple electronic cord distribution bays. The bays are designed to divide and separate cellular phones and other electronic device charging cords while they are being used, or waiting to be used for recharging. A motherboard provides circuitry that allows power to be distributed through the charging cords to cellular phones.

US 201370041730 A1 discloses an advertising device, having a charging base for charging multiple various electronic devices. The advertising device Includes a three dimensional advertising member; a base member configured for supporting the advertising member; a plurality of charging interfaces disposed along the periphery of the base member; an illumination source disposed at an internal position of the base member; and a power distribution assembly for providing power to the illumination source and the plurality of charging connectors. In addition, the advertising device includes a notifying unit and a receiver fob associated with each charging connector.

WO 2006/02552 discloses an apparatus for charging two or more electronic devices having rechargeable batteries, which devices each have a connector for connection of a charger, which connector communicates with a control circuit for charging the rechargeable battery, which control circuit alone and/or which rechargeable battery has one or more predefined threshold values for voltage level and/or current in order to accept voltage level and/or current from a charger that is electronically connected to the charging connector, which apparatus is electrically connected via a cord to a mains-based AC voltage power outlet and which apparatus has a first electronic circuit that rectifies and converts the voltage from the power outlet into a working voltage, and which apparatus consists of a housing.

### SUMMARY OF THE INVENTION

The present invention relates to a portable charging station for charging up to eight mobile devices in public places, where the charging station may also provide space for advertising. The invention provides a portable multiple mobile electronic device charging station, which is a rechargeable unit for charging mobile electronic devices.

In a first aspect the invention provides a portable charging station for multiple mobile electronic devices comprising a housing with a lid. The housing contains a rechargeable ion battery, a divider plate, a main charging board, and a cord housing. The cord housing comprises up to eight retractable cords, and a faceplate with up to eight interface ports, which are configured to enable charging of connected electronic devices from the battery simultaneously.

The housing may be approximately cuboid, e,g, a rectangular cuboid or cube shaped. The housing may have a length of 13 - 16 cm (e.g. 14.7 cm), height of 11 - 13 cm (e.g. 12.4 cm) and width of 10 -12 cm (e.g. 11 cm). The lid may be a flip lid. The lid may be located on the top face of the housing. The battery of the portable charging station may be a 12-volt battery, e.g. a 12-volt lithium ion battery. The up to eight interface ports (e.g. 2, 3. 4, 5, 6, 7 or 8 interface ports) may be configured to enable charging of the connected electronic devices from the battery simultaneously at up to 5 V_{DC} per device. The cord housing may comprise eight retractable cords and a faceplate with eight interface ports. The cord housing may comprise less than 8, e.g. 2, 3, 4, 5, 6 or 7 retractable cords and / or interface ports. Multiple interface ports are provided to supply power to multiple and different devices.

The cord housing may be an enclosed casing for holding eight interface ports and eight retractable cords comprising: eight interface ports wherein up to eight mobile devices can be connected and charged simultaneously; and up to eight spools of cords used for charging mobile devices extendable up to two or four feet, wherein each spool of cord can be independently replaced. The cord spool may be a mechanism for retracting cords used for charging mobile devices comprising a single-sided spool, wherein a mobile device charging cord is extendable up to two feet from the spool and is retractable.

The portable charging station may further comprise at least one advertising message placed as a wrap and/or silk screening on the exterior of the charging station.

The portable multiple mobile electronic device charging station, hereafter referred to as charging station, is capable of providing a full charge for up to eight mobile devices simultaneously or individually providing convenient mobile charging at public places. For example, the charging station may provide a full charge for up to 2, 3, 4, 6, 7 or 8 mobile devices. Suitable mobile devices include mobile phones and tablet devices, although in principle any device using a similar charging interface may be charged using a charging station of the invention.

The charging station can be covered with wraps or silk screening for advertising. The use of advertising may provide an incentive for a business to sponsor the charging station.

The charging station comprises a housing, a battery located within the housing, a main charging board located within the housing and up to eight interface ports in communication with the main charging board. The battery may be a 12-volt battery, for example a 12-volt lithium ion battery. The battery may have a capacity of 10000 - 30000 mAh, e.g. a capacity of about 20000 mAh. The battery may have an input of about 5 V / 2 A and/or an output of 5 V / 4 A. The battery may be capable of charging up to six mobile devices simultaneously. The device may comprise or consist of 2, 3, 4, 5, 6, 7 or 8 interface ports. The charging station is configured to enable charging of multiple mobile devices from the charging station simultaneously.

The interface ports may comprise a cord housing that comprises up to eight (for example the cord housing may comprise or consist of , 2, 3, 4, 5, 6, 7 or 8; e.g. 6, 7 or 8) retractable cords to connect mobile devices for charging. The retractable cords may have a maximum extended length of up to about 1 ft, 2 ft, 3 ft or 4 ft, e.g. the retractable cords may have a maximum extended length of up to about 2 ft. Each retractable cord may be in an independent module mounted in the cord housing. Each independent module may be independently interchangeable, which may permit the device to be updated with new retractable cord(s) when new mobile devices with different charging sockets become available. The charging station is configured to rest on a charging base, which charges the rechargeable battery contained within the charging station.

In a second aspect the invention provides the portable charging station of the first aspect in combination with a separate charging base. The charging base comprises a battery connector adapted such that a portable multiple mobile device charging station may be placed upon it; an input adapter configured to connect an input voltage; and an output adaptor. The charging base is configured such that the input voltage provides a voltage source for the battery connector and the output adaptor. The input voltage is provided by an AC - DC inverter cord or the output adaptor of another charging base.

The charging base comprises an input and an output adaptor. One of the input adaptor and output adaptor may be male. The other of the input and output adaptor may be female. For example, the input adaptor may be female and the output adaptor may be male. The input adaptor provides an input for an input voltage that provides a voltage source to charge the rechargeable battery. The output adaptor provides an output for a voltage at the same or a similar level to the input voltage. The input voltage may be provided by an AC - DC inverter cord that converts an AC source to 12V_{DC}, for example a 120V_{AC} to 12V_{DC} inverter cord or a 230V_{AC} to 12V_{DC} inverter cord. The input voltage may be provided by the output adaptor of another charging base of a device of the invention.

This provides a compact arrangement for providing power to multiple, e.g. up to six, charging bases. For example an AC - DC inverter cord may be used to provide power (e.g. 12V_{DC}) to a first charging base, with the output adaptor of the first charging base providing a voltage source for the input adaptor of the second charging base. The output adaptor of the second charging base may be connected to the input adaptor of a third charging base. Up to six charging bases of the present invention, for example 2, 3, 4, 5 or 6 charging bases may be connected in series in this manner, using a single external voltage input into the first charging base. This provides that the charging devices of the invention may be connected in a modular manner, providing scalability.

In a third aspect the invention provides a device that comprises a portable charging station of the first aspect placed on a charging base of the second aspect, wherein the portable charging station is placed on the portable charging base such that the rechargeable battery is in electrical connection with the battery connector. This device may comprise up to six portable charging stations placed on up to six charging bases connected in series.

In an aspect the invention provides a method of charging a mobile electronic device, comprising connecting the mobile electronic device to a retractable cord of the portable charging station of any of claims 1 to 7 or 12.

### BRIEF DESCRIPTION OF THE DRAWINGS

Figure 1. Exploded view diagram showing an embodiment of the present invention.
Figure 2. Front view diagram showing an embodiment of the present invention in use.
Figure 3. Cross section view diagram showing the internal layout of an embodiment of the present invention.
Figure 4. Top view of an embodiment of the present invention without lid showing details.
Figure 5. Front view diagram showing the interlocking bases of an embodiment of the present invention.

### DETAILED DESCRIPTION

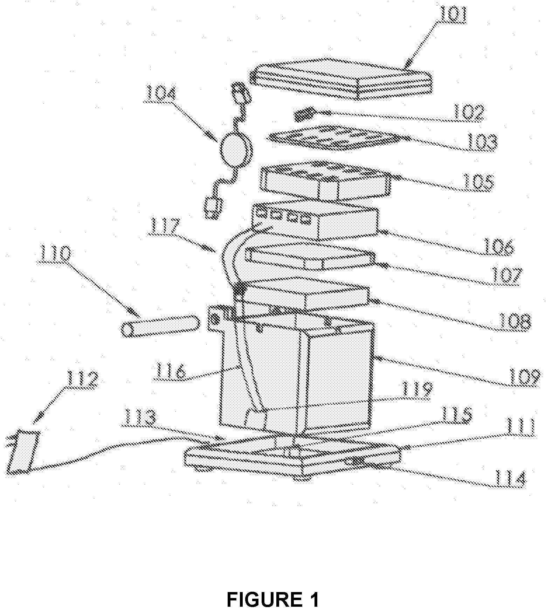

Figure 1 represents a portable multiple mobile electronic device charging station that is an embodiment of the present invention. The portable multiple mobile electronic device charging station is intended to charge mobile devices in public places while providing advertisement space. The portable multiple mobile electronic device charging station typically uses a charging base 111 to charge the rechargeable battery 108 (for example a 12-volt lithium ion battery) that is mounted in housing 109, that is covered by divider 107 that charging board 106 is mounted to covered by a cord housing 105, that retractable cord 104 mounts inside of and that plugs into main charging board 106, the opposite end of retractable cord 104 goes through faceplate 103 and held in place by a retainer 102 (for example a plastic filler) that snaps into faceplate 103 to prevent over retracting. The housing 109 is covered by lid 101. The housing 109 and lid 101 are mounted together by a hinged arrangement which may comprise a connector pin 110. A wiring harness 116 connects a female receiver 119 to the rechargeable battery 108, connecting wire 117 connects the rechargeable battery 108 to main charging board 106 and electrical cord 112 (not illustrated) inserts into input connector 113 making it capable to plug into a wall outlet. An output connector 114 is available to insert into additional stations to interlock them and transfer power through multiple units with one power supply. Screws 118 (not illustrated) will pass through parts, faceplate 103, cord housing 105, divider plate 107, and screws into main housing 109, female receiver 119 connects to charging mount 115.

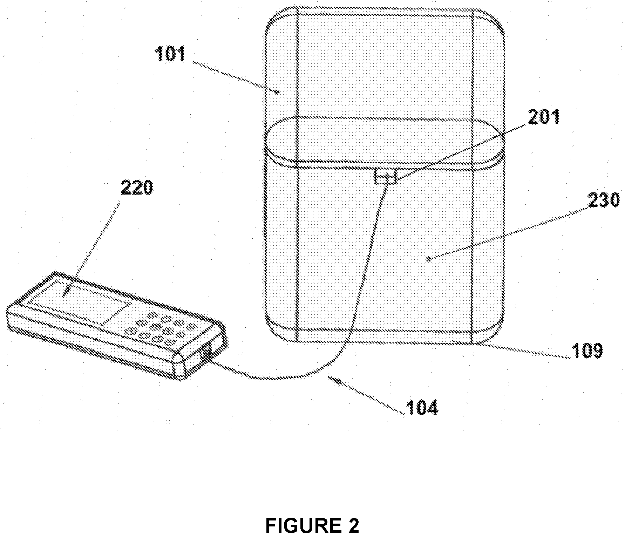

Figure 2 shows an embodiment of the present invention in use. The invention typically uses retractable cord 104 that mounts inside of the cord housing 105 and that plugs into main charging board 106, with one end that plugs into main charging board 106 and the opposite end of retractable cord 104 goes through faceplate 103, as explained in relation to figure 1. The end of the retractable cord that goes through the faceplate 103 further goes through a slot 201 from main housing 109 that is covered by lid 101. The retractable cord ends in a head that may plug into electronic device 220. The charging station may also display an advertisement on advertising space 230. The advertising space 230 may be located on the outside of the housing 109 and / or the advertising space may be located on the lid 101.

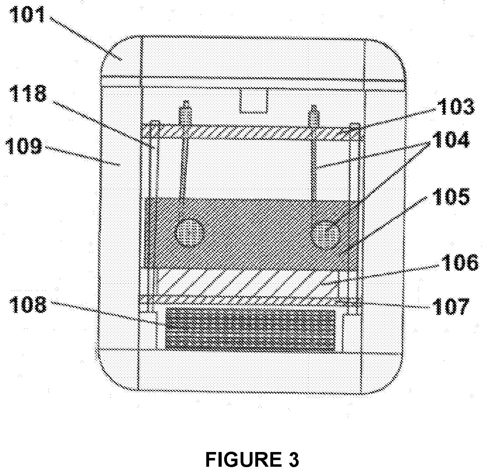

Figure 3 shows a cross section of a charging station of figure 2 ready for use, typically containing faceplate 103 that retractable cord 104 protrudes through that is mounted in cord housing 105 that sits on main charging board 106 that mounts onto divider pate 107 that covers a rechargeable battery 108 (e.g. a 12-volt lithium ion battery) which is secured in place by screws 118 going through faceplate 103, cord housing 105, divider plate 107 and mounts to main housing 109 which is contained under lid 101.

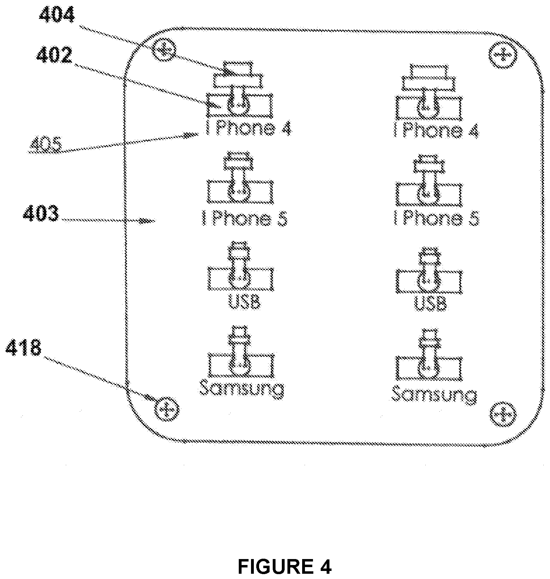

Figure 4 shows detail of the top of an exemplary charging station containing faceplate 403 attached to station by screws 418 with retractable cord 404 protruding through and secured by plastic filler 402 with cord label 405 identifying the different cord options. Each retractable cord 404 may be independently removed and inserted from the cord housing. Advantageously, this allows the configuration of the cord options to be updated as necessary. For example if a new mobile device becomes available that does not correspond to an existing cord option of a charging station of the invention, an obsolete retractable cord 404 may be removed from the cord housing 105 and replaced with a new retractable cord 404 that is compatible with the new device. Similarly, a damaged retractable cord 404 may be readily replaced with a new retractable cord 404.

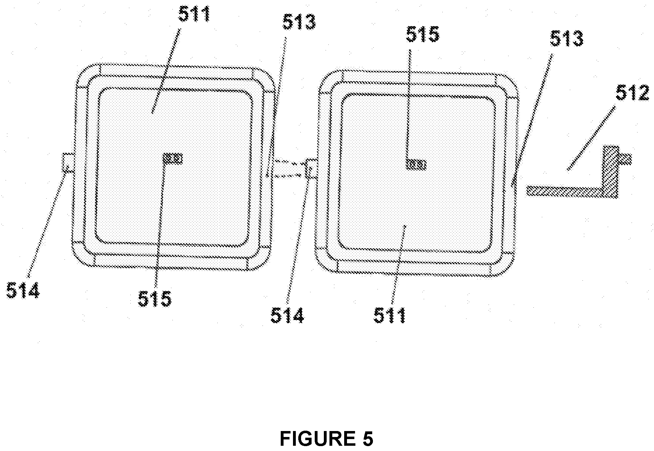

Figure 5 shows the details of a charging base with a front view diagram showing the interlocking of bases of an embodiment of the present invention. This typically contains a charging base 511 which connects to a power outlet by the electrical cord 512 supplying power into the input connector 513 for a charging station to be placed on battery connector or charging mount 515. If multiple bases are connected, power is supplied to the next charging base 502, for example, by output connector 514 inserted into the next input connector 503.

Further examples are disclosed by the following numbered clauses:
1. A device that is a portable charging station for multiple mobile electronic devices comprising:
   a cube-shaped main housing with a flip lid containing:
   a rechargeable 12-volt lithium ion battery, a divider plate, a main charging board, a cord housing including eight retractable cords extendable up to two feet, and a faceplate with eight interface ports, which are configured to enable charging of connected electronic devices from the battery simultaneously up to the required 5V_{DC} per device.
2. The device of clause 1, further comprising:
   advertising messages placed as wraps or silk screening on the exterior of the charging station.
3. The device of clause 1 or clause 2, wherein the cord housing is an enclosed
   casing for holding eight interface ports and eight retractable cords comprising:
   eight interface ports wherein up to eight mobile devices can be connected and charged simultaneously;
   spools of cords used for charging mobile devices extendable up to two feet that can be replaced upon evolving technology requirements.
4. The device of clause 3, wherein the cord spool is a mechanism for retracting cords used for charging mobile devices comprising:
   a single-sided spool, wherein a mobile device charging cord is extendable up to two feet and is retractable.
5. A separate charging base which is a device for charging a 12-volt lithium ion battery comprising:
   a battery connector upon which the portable multiple mobile device charging station rests;
   a female and male adapter to connect up to six charging bases with one 120V_{AC} to 12V_{DC} volt inverter cord.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention is defined by the features of the independent claims. Preferred embodiments are defined by the dependent claims.

## Claims

1. A portable charging station for multiple mobile electronic devices comprising:
a cube-shaped housing (109) comprising a lid (101) on the top face of the housing;
wherein the housing and lid are mounted together by a hinge; the housing containing:
a rechargeable 12-volt lithium ion battery (108) mounted in the housing,
a divider plate (107) covering the rechargeable 12-volt lithium ion battery,
a main charging board (106) mounted to the divider plate,
a cord housing (105) comprising up to eight retractable cords (104, 404)
covering the main charging board,
and a faceplate (103, 403) stacked on top of the cord housing compartment with up to eight interface ports, which are configured to enable charging of connected electronic devices from the battery simultaneously at up to 5 V_{DC} per device;
wherein each cord is extending from the cord housing compartment and connected at a first end to the main charging board and at a second end positioned through the faceplate at a corresponding interface port, and extending through the faceplate for connection with one of the multiple portable electronic devices; and
wherein the divider plate, main charging board, cord housing compartment, and faceplate are mounted in vertical arrangement from the bottom to the top of the cube.

2. The portable charging station of claim 1, wherein the cord housing comprises eight retractable cords and a faceplate with eight interface ports.

3. The portable charging station of claim 1 or claim 2, wherein the cord housing is an enclosed casing for holding eight interface ports and eight retractable cords comprising:
eight interface ports wherein up to eight mobile devices can be connected and charged simultaneously; and
up to eight spools of cords used for charging mobile devices extendable up to four feet, wherein each spool of cord can be independently replaced.

4. The portable charging station of claim 3, wherein the cord spool is a mechanism for retracting cords used for charging mobile devices comprising:
a single-sided spool, wherein a mobile device charging cord is extendable up to two feet from the spool and is retractable.

5. The portable charging station of any preceding claim, further comprising at least one advertising message placed as a wrap and/or silk screening (230) on the exterior of the charging station.

6. The portable charging station of any of claims 1 to 5, further comprising a separate charging base (111, 511); the separate charging base comprising:
a battery connector adapted such that a portable multiple mobile device charging station may be placed upon it;
an input adapter (513) configured to connect an input voltage; and
an output adaptor (514);
wherein the charging base is configured such that the input voltage provides a voltage source for the battery connector and the output adaptor, and
wherein the input voltage is provided by an AC - DC inverter cord or the output adaptor of another charging base; and
wherein the portable charging station is placed on the portable charging base such that the rechargeable battery is in electrical connection with the battery connector.

7. The portable charging station of claim 6, wherein the input adaptor is female and the output adaptor is male.

8. The portable charging station of claim 6 or claim 7, wherein the input voltage is 12V_{DC} and is optionally provided by a 120V_{AC} to 12V_{DC} inverter cord or a 230V_{AC} to 12V_{DC} inverter cord.

9. The portable charging station of any of claims 6 to 8, wherein 2, 3, 4, 5 or 6 separate charging bases are connected in series,
wherein the output adaptor (514) of the first charging base (511) provides a voltage source for the input adaptor (503) of the second charging base (502);
wherein when a third charging base is present the output adaptor of the second charging base provides a voltage source for the input adaptor of the third charging base;
wherein when a fourth charging base is present the output adaptor of the third charging base provides a voltage source for the input adaptor of the fourth charging base;
wherein when a fifth charging base is present the output adaptor of the fourth charging base provides a voltage source for the input adaptor of the fifth charging base; and
wherein when a sixth charging base is present the output adaptor of the fifth charging base provides a voltage source for the input adaptor of the sixth charging base.

10. A method of charging a mobile electronic device (220), comprising connecting the mobile electronic device to a retractable cord (104) of the portable charging station of any of claims 1 to 9.

## Patentansprüche

1. Tragbare Ladestation für mehrere mobile elektronische Vorrichtungen, umfassend:
ein würfelförmiges Gehäuse (109), umfassend einen Deckel (101) auf der oberen Fläche des Gehäuses;
wobei das Gehäuse und der Deckel durch ein Scharnier aneinander befestigt sind; wobei das Gehäuse Folgendes enthält:
eine wiederaufladbare 12-Volt-Lithium-Ionen-Batterie (108), die im Gehäuse befestigt ist,
eine Unterteilungsplatte (107), die die wiederaufladbare 12-Volt-Lithium-Ionen-Batterie abdeckt,
eine Hauptladeplatte (106), die an der Unterteilungsplatte befestigt ist,
ein Kabelgehäuse (105), umfassend bis zu acht zurückziehbare Kabel (104, 404), das die Hauptladeplatte abdeckt,
und eine Vorderplatte (103, 403), die oben auf das Kabelgehäusefach gestapelt ist, mit bis zu acht Schnittstellenanschlüssen, die konfiguriert sind, um das gleichzeitige Aufladen angeschlossener elektronischer Geräte aus der Batterie bei bis zu 5 V_{DC} je Gerät zu ermöglichen;
wobei sich jedes Kabel vom Kabelgehäusefach erstreckt und an einem ersten Ende an die Hauptladeplatte angeschlossen ist und an einem zweiten Ende durch die Vorderplatte an einem entsprechenden Schnittstellenanschluss positioniert ist, und sich durch die Vorderplatte erstreckt zur Verbindung mit einer der mehreren tragbaren elektronischen Vorrichtungen; und
wobei die Unterteilungsplatte, die Hauptladeplatte, das Kabelgehäusefach und die Vorderplatte in einer vertikalen Anordnung von der Unterseite zur Oberseite des Würfels angeordnet sind.

2. Tragbare Ladestation nach Anspruch 1, wobei das Kabelgehäuse acht zurückziehbare Kabel und eine Vorderplatte mit acht Schnittstellenanschlüssen umfasst.

3. Tragbare Ladestation nach Anspruch 1 oder Anspruch 2, wobei das Kabelgehäuse ein umschlossenes Gehäuse zum Halten von acht Schnittstellenanschlüssen und acht zurückziehbaren Kabeln ist, umfassend:
acht Schnittstellenanschlüsse, wobei bis zu acht mobile Geräte gleichzeitig angeschlossen und aufgeladen werden können; und
bis zu acht Kabelspulen, die für das Aufladen von mobilen Geräten verwendet werden und auf bis zu vier Fuß (1,20 m) erweitert werden können, wobei jede Kabelspule unabhängig ersetzt werden kann.

4. Tragbare Aufladestation nach Anspruch 3, wobei die Kabelspule ein Mechanismus zum Zurückziehen von Kabeln, die zum Aufladen von mobilen Geräten verwendet werden, ist, umfassend:
eine einseitige Spule, wobei ein Aufladekabel für ein mobiles Gerät auf bis zu zwei Fuß (0,60 m) von der Spule erweitert und zurückgezogen werden kann.

5. Tragbare Aufladestation nach einem der vorstehenden Ansprüche, ferner umfassend mindestens eine als Hülle und/oder Siebdruck (230) auf dem Äußeren der Ladestation platzierte Werbebotschaft.

6. Tragbare Aufladestation nach einem der Ansprüche 1 bis 5, ferner umfassend eine separate Aufladebasis (111, 511); wobei die separate Aufladebasis Folgendes umfasst:
einen Batterieanschluss, der angepasst ist, so dass eine tragbare Aufladestation für mehrere Mobilgeräte darauf platziert werden kann;
einen Eingangsadapter (513), der konfiguriert ist, um eine Eingangsspannung anzuschließen; und
einen Ausgangsadapter (514);
wobei die Aufladebasis konfiguriert ist, so dass die Eingangsspannung eine Spannungsquelle für den Batterieanschluss und den Ausgangsadapter bereitstellt, und
wobei die Eingangsspannung durch ein Wechselstrom/Gleichstrom-Inverterkabel oder den Ausgangsadapter für eine weitere Aufladebasis bereitgestellt wird; und
wobei die tragbare Aufladestation auf der tragbaren Aufladebasis platziert ist, so dass die aufladbare Batterie in elektrischer Verbindung mit dem Batterieanschluss steht.

7. Tragbare Aufladestation nach Anspruch 6, wobei der Eingangsadapter eine Buchse und der Ausgangsadapter ein Stecker ist.

8. Tragbare Aufladestation nach Anspruch 6 oder Anspruch 7, wobei die Eingangsspannung 12V_{DC} ist und optional durch ein 120V_{AC} zu 12V_{DC} Inverterkabel oder ein 230V_{AC} zu 12V_{DC} Inverterkabel bereitgestellt wird.

9. Tragbare Aufladestation nach einem der Ansprüche 6 bis 8, wobei 2, 3, 4, 5 oder 6 separate Aufladebasen in Reihe angeschlossen sind,
wobei der Ausgangsadapter (514) der ersten Aufladebasis (511) eine Spannungsquelle für den Eingangsadapter (503) der zweiten Aufladebasis (502) bereitstellt;
wobei, wenn eine dritte Aufladebasis vorhanden ist, der Ausgangsadapter der zweiten Aufladestation eine Spannungsquelle für den Eingangsadapter der dritten Aufladebasis bereitstellt;
wobei, wenn eine vierte Aufladebasis vorhanden ist, der Ausgangsadapter der dritten Aufladestation eine Spannungsquelle für den Eingangsadapter der vierten Aufladebasis bereitstellt;
wobei, wenn eine fünfte Aufladebasis vorhanden ist, der Ausgangsadapter der vierten Aufladebasis eine Spannungsquelle für den Eingangsadapter der fünften Aufladebasis bereitstellt; und
wobei, wenn eine sechste Aufladebasis vorhanden ist, der Ausgangsadapter der fünften Aufladebasis eine Spannungsquelle für den Eingangsadapter der sechsten Aufladebasis bereitstellt.

10. Verfahren zum Aufladen einer mobilen elektronischen Vorrichtung (220), umfassend das Anschließen der mobilen elektronischen Vorrichtung an ein zurückziehbares Kabel (104) der tragbaren Aufladestation nach einem der Ansprüche 1 bis 9.

## Revendications

1. Station de charge portative pour plusieurs dispositifs électroniques mobiles comprenant :
un logement en forme de cube (109) comprenant un couvercle (101) sur la face supérieure du logement ; ledit logement et ledit couvercle étant fixés ensemble par une charnière ; ledit logement contenant : une batterie lithium-ion 12 volts rechargeable (108) fixée dans le logement, une plaque de séparation (107) couvrant la batterie lithium-ion 12 volts rechargeable, une carte de charge principale (106) fixée à la plaque de séparation, un logement de câbles (105) comprenant jusqu'à huit câbles rétractables (104, 404) couvrant la carte de charge principale, et une plaque frontale (103, 403) empilée sur la partie supérieure du compartiment de logement de câbles avec jusqu'à huit ports d'interface, qui sont conçus pour permettre simultanément le chargement de dispositifs électroniques branchés à partir de la batterie jusqu'à 5 V_{CC} par dispositif ;
chaque câble s'étendant depuis le compartiment de logement de câbles et étant branché au niveau d'une première extrémité à la carte de recharge principale et au niveau d'une seconde extrémité positionnée à travers la plaque frontale à un port d'interface correspondant et s'étendant à travers la plaque frontale pour le branchement avec l'un des plusieurs dispositifs électroniques portatifs ;
et ladite plaque de séparation, ladite carte de charge principale, ledit compartiment de logement de câbles et ladite plaque de séparation étant montés dans un agencement vertical allant du bas jusqu'en haut du cube.

2. Station de charge portative selon la revendication 1, ledit logement de câbles comprenant huit cordons rétractables et une plaque frontale avec huit ports d'interface.

3. Station de charge portative selon la revendication 1 ou 2, ledit logement de câbles étant un boîtier fermé destiné à contenir les huit ports d'interface et les huit câbles rétractables comprenant :
huit ports d'interface, jusqu'à huit dispositifs mobiles pouvant être branchés et chargés simultanément ; et
jusqu'à huit bobines de câbles utilisés pour charger des dispositifs mobiles pouvant s'étendre jusqu'à quatre pieds, chaque bobine de câble pouvant être remplacée indépendamment.

4. Station de charge portative selon la revendication 3, ladite bobine de câble étant un mécanisme permettant la rétraction des câbles utilisés pour charger des dispositifs mobiles comprenant :
une bobine unilatéral, un câble de charge de dispositif mobile pouvant s'étendre jusqu'à deux pieds depuis la bobine et étant rétractable.

5. Station de charge portative selon l'une quelconque des revendications précédentes, comprenant en outre au moins un message publicitaire placé sous forme d'une enveloppe ou de sérigraphie (230) sur l'extérieur de la station de charge.

6. Station de charge portative selon l'une quelconque des revendications 1 à 5, comprenant en outre une base de charge séparée (111, 511) ; ladite base de charge séparée comprenant :
un connecteur de batterie adapté de sorte qu'une station de charge pour plusieurs dispositifs mobiles puisse être placée sur celui-ci ;
un adaptateur d'entrée (513) conçu pour brancher une tension d'entrée ; et un adaptateur de sortie (514) ;
ladite base de charge étant conçue de sorte que la tension d'entrée fournisse une source de tension pour le connecteur de batterie et l'adaptateur de sortie, et ladite tension d'entrée étant fournie par un câble d'onduleur CA-CC ou l'adaptateur de sortie d'une autre base de charge ; et
ladite station de charge portative étant placée sur la base de charge portative de sorte que la batterie rechargeable est branchée électriquement au connecteur de batterie.

7. Station de charge portative selon la revendication 6, ledit adaptateur d'entrée étant de type femelle et ledit adaptateur de sortie étant de type mâle.

8. Station de charge portative selon la revendication 6 ou 7, ladite tension d'entrée étant 12V_{CC} et étant éventuellement fournie par un câble d'onduleur de 120 V_{CA} à 12 V_{CC} ou un câble onduleur de 230 V_{CA} à 12 V_{CC}.

9. Station de charge portative selon l'une quelconque des revendications 6 à 8, 2, 3, 4, 5 ou 6 bases de charge séparées étant branchées en série, ledit adapteur de sortie (514) de la première base de charge (511) constituant une source de tension pour l'adaptateur d'entrée (503) de la seconde base de charge (502) ;
lorsqu'une troisième base de charge est présente, ledit adaptateur de sortie de la second base de charge constituant une source de tension à l'adaptateur d'entrée de la troisième base de charge ; lorsqu'une quatrième base de charge est présente, ledit adaptateur de sortie de la troisième base de charge constituant une source de tension pour l'adaptateur d'entrée de la quatrième base de charge ;
lorsqu'une cinquième base de charge est présente, ledit adaptateur de sortie de la quatrième base de charge constituant une source de tension pour l'adaptateur d'entrée ; et lorsqu'une sixième base de charge est présente, ledit adaptateur de sortie de la cinquième base de charge constituant une source de tension pour l'adaptateur d'entrée de la sixième base de charge.

10. Procédé de charge d'un dispositif électronique mobile (220) comprenant le branchement du dispositif électronique mobile à un cordon rétractable (104) de la station de charge portative de l'une quelconque des revendications 1 à 9.
